# EUROPÄISCHE PATENTSCHRIFT

(11) **EP 2 573 618 B1**
(45) Veröffentlichungstag und Bekanntmachung des Hinweises auf die Patenterteilung: **14.05.2014**
(21) Anmeldenummer: 11007670.0
(22) Anmeldetag: 21.09.2011
(51) Int. Cl.: G03B 42/04

(54) **Vorrichtung, System und Verfahren zum Auslesen von in Speicherleuchtstoffplatten gespeicherten Röntgeninformationen**
Device, method and system for reading out x-ray information stored in storage phosphor plates
Dispositif, système et procédé destinés à la lecture d'informations radiographiques stockées dans des plaques fluorescentes de mémoire

(43) Veröffentlichungstag der Anmeldung: 27.03.2013
(73) Patentinhaber: Agfa HealthCare N.V., 2640 Mortsel (BE)
(72) Erfinder: Sandmann, Patrick, 81735 München (DE); Schindlbeck, Günther, 81545 München (DE); Hammer, Heribert, 81371 München (DE)
(74) Vertreter: Linsmeier, Josef

(56) Entgegenhaltungen:
- EP-A1- 0 219 821
- DE-A1- 2 845 077
- DE-C1- 3 610 659
- GB-A- 2 100 881
- US-A- 2 924 717
- US-A- 5 138 160
- US-A- 5 308 994
- US-A- 6 068 439

## Beschreibung

Die vorliegende Erfindung betrifft eine Vorrichtung, ein System sowie ein entsprechendes Verfahren zum Auslesen von in Speicherleuchtstoffplatten gespeicherten Röntgeninformationen gemäß dem Oberbegriff der unabhängigen Ansprüche.

Eine Möglichkeit zur Aufzeichnung von Röntgenbildern besteht darin, die durch ein Objekt, beispielsweise einen Patienten, hindurch tretende Röntgenstrahlung als latentes Bild in einer sogenannten Speicherleuchtstoffplatte zu speichern. Zum Auslesen des latenten Bildes wird die Speicherleuchtstoffplatte mit Stimulationslicht bestrahlt und dabei zur Aussendung von Emissionslicht angeregt. Das Emissionslicht, dessen Intensität dem in der Speicherleuchtstoffplatte gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinischdiagnostischen Zwecken, bereitgestellt, indem sie an einem entsprechenden Ausgabegerät, wie z. B. einem Monitor und/oder Drucker, ausgegeben werden.

Bei Vorrichtungen und Systemen aus dem Stand der Technik sind zum Arretieren und/oder Öffnen der in die Vorrichtung bzw. das Systems eingegebenen Kassette, in welcher sich die auszulesende Speicherleuchtstoffplatte befindet, elektromechanische Aktuatoren, die meist von Elektromotoren angetrieben werden, vorgesehen.

Aus US 5,138,160 ist bekannt, einen an einer Kassette vorgesehenen Verschluss zu öffnen, indem bei einer Abwärtsbewegung der Kassette Klinken betätigt werden, die von außen in Löcher von in der Kassette befindlichen Sperrmitteln eingreifen, welche dann den Kassettenverschluss freigeben. Ein ähnliches Prinzip zeigt die aus US 6,068,439 bekannte Kassette, bei welcher ein mit dem Verschluss in Eingriff stehender Schieber von außen durch einen Stift betätigt und dadurch außer Eingriff mit dem Verschluss gebracht wird. Aus EP 0 219 821 A1 ist ein Kassettenhalter mit zwei abgeschrägten Flächen bekannt, von welchen zwei an der Öffnung einer in den Kassettenhalter eingegebenen Kassette befindliche Klappenelemente aus ihrer geschlossenen Stellung in eine geöffnete Stellung gebracht werden.

Es ist Aufgabe der vorliegenden Erfindung, eine Vorrichtung, ein System sowie ein entsprechendes Verfahren zum Auslesen von Speicherleuchtstoffplatten anzugeben, welche bzw. welches bei vereinfachtem Aufbau ein möglichst zuverlässiges Arretieren und/oder Öffnen der eingegebenen Kassette ermöglicht.

Diese Aufgabe wird durch die Vorrichtung, das System bzw. das Verfahren gemäß den unabhängigen Ansprüchen gelöst.

Die erfindungsgemäße Vorrichtung umfasst eine Eingabeeinrichtung, in welche eine Kassette mit einer darin befindlichen Speicherleuchtstoffplatte eingegeben werden kann, und eine Ausleseeinrichtung, in welcher die Speicherleuchtstoffplatte mit Stimulationslicht bestrahlt und das hierbei in der Speicherleuchtstoffplatte angeregte Emissionslicht erfasst werden kann, und zeichnet sich durch mindestens ein mechanisches Element aus, welches durch eine Bewegung der Kassette bei deren Eingabe in die Eingabeeinrichtung mechanisch angetrieben werden kann und dabei die Kassette in der Eingabeeinrichtung arretieren und/oder öffnen kann.

Das erfindungsgemäße System weist neben der erfindungsgemäßen Vorrichtung eine Kassette zur Aufnahme einer Speicherleuchtstoffplatte auf.

Das erfindungsgemäße Verfahren weist folgende Schritte auf: Eingabe einer Kassette mit einer darin befindlichen Speicherleuchtstoffplatte in eine Eingabeeinrichtung und Bestrahlen der Speicherleuchtstoffplatte mit Stimulationslicht und Erfassen des hierbei in der Speicherleuchtstoffplatte angeregten Emissionslichts und ist dadurch gekennzeichnet, dass mindestens ein mechanisches Element durch eine Bewegung der Kassette bei deren Eingabe in die Eingabeeinrichtung mechanisch angetrieben wird und dabei die Kassette in der Eingabeeinrichtung arretiert und/oder öffnet.

Die Erfindung basiert auf dem Gedanken, dass durch ein oder mehrere mechanische Elemente, die lediglich durch das Einführen, insbesondere Einschieben, der Kassette in die Eingabeeinrichtung angetrieben oder betätigt werden, die Kassette in der Eingabeeinrichtung gehalten und/oder der Verschluss der Kassette entriegelt und/oder geöffnet wird. Die mechanische Energie zum Antreiben der mechanischen Elemente stammt hierbei im Wesentlichen aus der von der Bedienperson beim Einführen, insbesondere Einschieben, der Kassette aufgebrachten Kraft bzw. Energie. Das Halten, Entriegeln bzw. Öffnen der Kassette erfolgt dabei rein mechanisch, z.B. unter Verwendung von mechanischen Anschlägen, Rastmitteln, Hebeln und Spannfedern, und ohne die sonst üblichen elektromechanischen Antriebe, wie Elektromotoren, Elektromagnete, Relais oder dergleichen. Die jeweiligen mechanischen Prozesse beim Halten, Entriegeln bzw. Öffnen der Kassette werden hierbei alleine durch die Eingabe der Kassette - und insbesondere ohne Lichtschranken oder andere Sensoren - ausgelöst, so dass in diesem Zusammenhang auch von einem selbstauslösenden Mechanismus gesprochen werden kann. Analog zur rein mechanischen Arretierung der Kassette und/oder Entriegelung bzw. Öffnung des Verschlusses der Kassette erlauben die mechanischen Elemente selbstverständlich auch ein rein mechanisch angetriebenes Verschließen und Verriegeln des Verschlusses bzw. eine Entarretierung bzw. Freigabe der Kassette durch eine von der Bedienperson vorgenommenen Entnahme der Kassette aus der Eingabeeinrichtung.

Durch die Erfindung ist es möglich, auf die üblicherweise bei der Kassetteneingabe, -entriegelung und -öffnung verwendeten elektromechanischen Komponenten vollständig zu verzichten, was den Aufbau erfindungsgemäßer Vorrichtungen und Systeme beträchtlich vereinfacht und nicht zuletzt wegen der damit verbundenen verminderten Störanfälligkeit gleichzeitig ein besonders zuverlässiges Arretieren, Entriegeln bzw. Öffnen der eingegebenen Kassette ermöglicht.

Vorzugsweise ist die Bewegung der Kassette bei deren Eingabe in die Eingabeeinrichtung eine von einer Bedienperson ausgeführte Bewegung, insbesondere eine Schubbewegung. Dadurch kann auch bei der Erzeugung der Bewegung der Kassette auf zusätzliche elektromechanische Antriebe oder dergleichen verzichtet werden.

Es ist außerdem bevorzugt, dass als mechanisches Element mindestens ein Hebel oder ein Hebelsystem vorgesehen ist, welcher bzw. welches durch die Bewegung der Kassette bei deren Eingabe in eine Stellung gebracht werden kann, in welcher der Hebel bzw. das Hebelsystem die Kassette in einer vorgegebenen Position arretiert. Hierzu können am Hebel bzw. Hebelsystem Elemente, beispielsweise Vorsprünge, vorgesehen sein, welche in entsprechende Elemente an der Kassette, beispielsweise Nuten, eingreifen können, wenn der Hebel bzw. das Hebelsystem durch die Bewegung der Kassette in eine der Kassette angenäherte Stellung gebracht wird. Hierzu wird auf einfache Weise eine zuverlässige Arretierung der Kassette realisiert.

Bei einer weiteren bevorzugten Ausführung ist als mechanisches Element mindestens ein Entriegelungselement vorgesehen, welches durch die Bewegung der Kassette bei deren Eingabe in eine Stellung gebracht werden kann, in welcher das Entriegelungselement einen an der Kassette vorgesehenen Verschluss, insbesondere eine schwenkbare Verschlussklappe, entriegeln kann. Das Entriegelungselement kann z.B. ein Bolzen sein, der einen in oder an der Kassette befindlichen Verriegelungsmechanismus zur Ver- und Entriegelung der Verschlussklappe betätigen kann. Hierdurch wird auch die Ver- und Entriegelung der geschlossenen Verschlussklappe der Kassette auf einfache und zuverlässige Weise bewerkstelligt.

Vorzugsweise ist als mechanisches Element mindestens ein Öffnungselement vorgesehen, welches durch die Bewegung der Kassette bei deren Eingabe in eine Stellung gebracht werden kann, in welcher das Öffnungselement einen an der Kassette vorgesehenen Verschluss - gegebenenfalls erst nach dessen Entriegelung durch das oben beschriebene Entriegelungselement - öffnen kann. Das Öffnungselement kann beispielsweise als schwenkbarer Greifer ausgebildet sein, welcher am Verschluss der Kassette an- oder eingreift, durch die Bewegung der Kassette eine Stellung verschwenkt wird und dabei den vorzugsweise schwenkbaren Verschluss in eine geöffnete Stellung bewegt. Ein Öffnen der Kassette wird hierdurch mit einfachen mechanischen Mittels auf zuverlässige Weise bewerkstelligt.

Bei einer weiteren bevorzugten Ausführung ist eine Arretiermechanik vorgesehen, durch welche das oder die mechanischen Elemente in der Stellung, in welcher diese die Kassette in der vorgegebenen Position arretieren bzw. den Verschluss entriegeln bzw. öffnen, arretiert und wieder entarretiert, d.h. von dieser Stellung gelöst, werden können. Die mechanischen Elemente werden hierbei auf einfache und zuverlässige Weise in ihrer jeweiligen Funktionsstellung gehalten, ohne dass weitere, ggf. elektromechanische, Mittel erforderlich sind.

Es ist außerdem bevorzugt, mindestens ein Spannelement, insbesondere eine Zugfeder oder Druckfeder, vorzusehen, durch welches das oder die mechanischen Elemente in der Stellung, in welcher die Kassette in der vorgegebenen Position arretiert bzw. der Verschluss entriegelt bzw. geöffnet ist, vorgespannt sind. Dies hat den Vorteil, dass die mechanischen Elemente bei der Entnahme der Kassette aus der Eingabeeinrichtung wieder von selbst in ihre Ausgangsstellung zurückgehen und dabei eine selbsttätige Entarretierung der Kassette bzw. ein selbsttätiges Schließen bzw. Verriegeln des Verschlusses bewirken.

Erfindungsgemäß ist vorgesehen, dass die Eingabeeinrichtung einen Träger und einen Wagen aufweist, wobei der Wagen die Kassette aufnehmen kann und bei aufgenommener Kassette relativ zum Träger bewegt werden kann. Vorzugsweise ist der Wagen am Träger beweglich gelagert. Es ist ferner bevorzugt, dass das mindestens eine mechanische Element am Wagen vorgesehen und zusammen mit diesem relativ zum Träger bewegbar ist. Durch eine oder mehrere dieser Maßnahmen lässt sich der Antrieb und insbesondere die zeitliche Abfolge der Betätigung mehrerer unterschiedlicher mechanischer Elemente besonders einfach und zuverlässig realisieren.

Es ist darüber hinaus bevorzugt, am Träger ein oder mehrere Leitelemente vorzusehen, durch welche bei der Bewegung des Wagens relativ zum Träger die Stellung des mindestens einen mechanischen Elements verändert werden kann. Bei den Leitelementen kann es sich beispielsweise um einen Anschlag für das mindestens eine Öffnungselement handeln, welches bei Kontakt mit dem Anschlag in der Weise mit diesem zusammenwirkt, dass dieses beispielsweise um eine Schwenkachse geschwenkt wird. Alternativ oder zusätzlich kann es sich bei den Leitelementen um keilförmige Elemente handeln, die beispielsweise mit dem Hebel oder Hebelsystem zum Arretieren der Kassette wechselwirken können und dementsprechend eine Arretierung bzw. Entarretierung der Kassette in einer bestimmten Position in der Eingabeeinrichtung bewirken können.

Bei dem erfindungsgemäßen System weist die Kassette vorzugsweise ein Verriegelungselement auf, durch welches der Verschluss, insbesondere die Verschlussklappe, der Kassette in einer die Öffnung verschließenden Stellung gehalten, insbesondere verriegelt, werden kann, wobei das Verriegelungselement von außerhalb der Kassette betätigt werden kann. Hierzu ist vorzugsweise im Seitenbereich der Kassette ein Betätigungselement vorgesehen, das mit dem Verriegelungselement mechanisch gekoppelt ist und von außerhalb der Kassette betätigt werden kann, beispielsweise durch einen Entriegelungsbolzen, welcher das Betätigungselement um eine endliche Strecke in die Kassette hinein drücken kann.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: eine schematische Darstellung einer Ausleseeinrichtung zum Auslesen von Speicherleuchtstoffplatten;
- Fig. 2: einen Querschnitt einer Vorrichtung bzw. eines Systems mit einer Eingabeeinrichtung;
- Fig. 3: einen Querschnitt der bzw. des in Fig. 2 dargestellten Vorrichtung bzw. Systems bei abgenommener Eingabeeinrichtung und Lichtabdeckung;
- Fig. 4: eine Seitenansicht einer Eingabeeinrichtung sowie einer Kassette;
- Fig. 5: eine Draufsicht auf die in Fig. 4 gezeigte Eingabeeinrichtung;
- Fig. 6: eine Seitenansicht der Eingabeeinrichtung bei eingegebener Kassette in einer ersten Phase der Eingabe;
- Fig. 7: eine Seitenansicht der Eingabeeinrichtung bei eingegebener Kassette in einer zweiten Phase der Eingabe;
- Fig. 8: eine Draufsicht auf die Eingabeeinrichtung in der in Fig. 7 gezeigten zweiten Phase der Eingabe, jedoch ohne eingegebene Kassette; und
- Fig. 9: eine Seitenansicht der Eingabeeinrichtung bei eingegebener Kassette in einer dritten Phase der Eingabe.

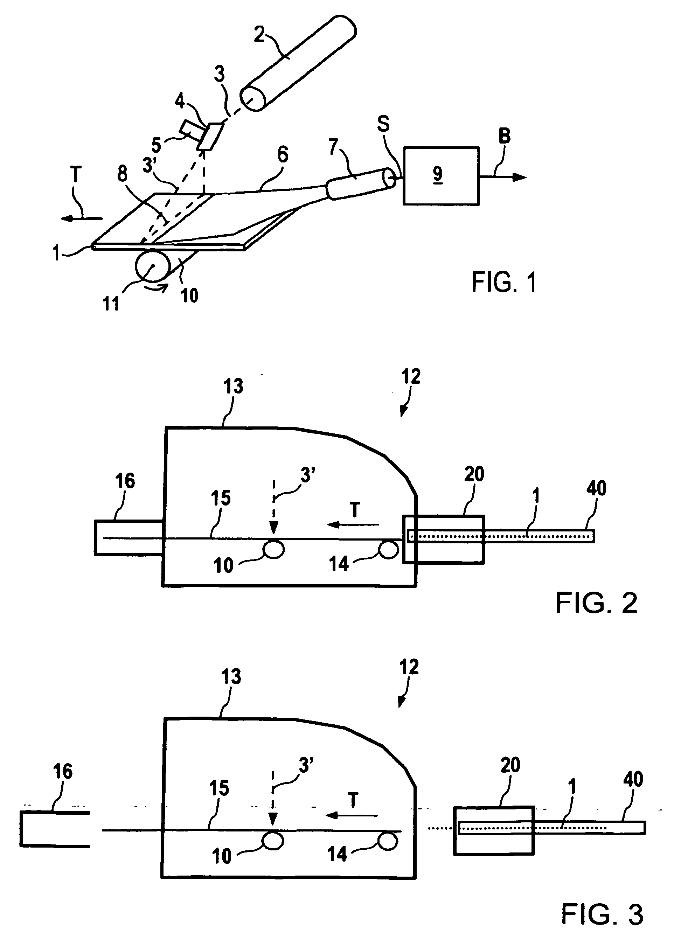

Figur 1 zeigt eine Ausleseeinrichtung zum Auslesen einer Speicherleuchtstoffplatte 1. Durch einen Laser 2 wird ein Stimulationslichtstrahl 3 erzeugt, welcher durch ein Ablenkelement 4 derart abgelenkt wird, dass sich dieser entlang einer Zeile 8 über die auszulesende Speicherleuchtstoffplatte 1 bewegt. Das Ablenkelement 4 weist eine reflektierende Fläche, insbesondere in Form eines Spiegels, auf, welche durch eine Antriebseinrichtung 5 in Oszillation versetzt wird. Alternativ kann das Ablenkelement 4 einen Polygonspiegel aufweisen, welcher durch die Antriebseinrichtung 5, in diesem Fall ein Motor, in Rotation versetzt wird und den Stimulationslichtstrahl 3 über die Speicherleuchtstoffplatte 1 lenkt.

Während der Bewegung des abgelenkten Stimulationslichtstrahls 3' über die Speicherleuchtstoffplatte 1 sendet diese in Abhängigkeit der darin gespeicherten Röntgeninformation Emissionslicht aus, welches von einer optischen Sammeleinrichtung 6, beispielsweise einem Lichtleiterbündel oder einer geeigneten Spiegeleinrichtung, gesammelt und von einem optischen Detektor 7, vorzugsweise einem Photomultiplier (PMT), erfasst und dabei in ein entsprechendes Detektorsignal S umgewandelt wird.

Das Detektorsignal S wird einer Einrichtung 9 zugeführt, in welcher digitale Bildsignalwerte B für einzelne Bildpunkte des ausgelesenen Röntgenbildes abgeleitet werden.

Durch eine Beförderung der Speicherleuchtstoffplatte 1 in Transportrichtung T mittels einer Transporteinrichtung wird ein sukzessives Auslesen einzelner Zeilen 8 der Speicherleuchtstoffplatte 1 erreicht und damit ein zweidimensionales, aus einzelnen Bildpunkten mit jeweils einem zugehörigen Bildsignalwert B zusammengesetztes Röntgenbild erhalten.

Die Transporteinrichtung umfasst im gezeigten Beispiel eine Walze 10, die durch einen Walzenantrieb (nicht dargestellt) in Rotation um die Rotationsachse 11 versetzt wird. Die Speicherleuchtstoffplatte 1 liegt mit ihrer Unterseite auf der Walze 10 auf und wird aufgrund des hierbei auftretenden Reibschlusses durch eine Rotation der Walze 10 in Richtung T befördert.

Die Walze 10 weist im dargestellten Beispiel magnetische, vorzugsweise permanentmagnetische oder elektromagnetische, Elemente oder Bereiche auf, welche mit in der Speicherleuchtstoffplatte 1 vorgesehenen magnetischen oder ferromagnetischen Elementen oder Bereichen wechselwirken, so dass die Speicherleuchtstoffplatte 1 von der Walze 10 angezogen wird, was den Reibschluss wesentlich verstärkt und dadurch einen besonders zuverlässigen Transport der Speicherleuchtstoffplatte 1 gewährleistet.

Die magnetischen Elemente oder Bereiche können auf der zylinderförmigen Oberfläche der Walze 10 angebracht sein, beispielsweise in Form einer Beschichtung oder Ummantelung der Oberfläche mit einer magnetischen Schicht oder einem magnetischen Band. Vorzugsweise ist die Walze 10 selbst permanentmagnetisch oder ferromagnetisch, so dass die magnetische Schicht bzw. das magnetische Band bereits durch magnetische Anziehungskräfte auf der Walze 10 zuverlässig gehalten wird.

Alternativ oder zusätzlich können die magnetischen Elemente oder Bereiche aber auch im Inneren einer als Hohlkörper ausgebildeten Walze 10 vorgesehen sein, beispielsweise durch Anordnung auf einem im Inneren der Walze 10 befindlichen Träger. Der Hohlkörper der Walze 10 braucht in diesem Fall nicht magnetisch oder ferromagnetisch zu sein, sondern kann auch para- oder diamagnetisch sein. Vorzugsweise handelt es sich hierbei um einen Hohlkörper aus Aluminium.

Figur 2 zeigt einen Querschnitt einer Vorrichtung 12 bzw. eines Systems zum Auslesen von Speicherleuchtstoffplatten. Die Vorrichtung 12 weist ein Gehäuse 13 auf, in welchem die in Figur 1 gezeigte Ausleseeinrichtung untergebracht ist, welche in der gewählten Darstellung durch die Walze 10 und den abgelenkten Stimulationslichtstrahl 3' angedeutet ist.

In einem vorderen Bereich des Gehäuses 13 der Vorrichtung 12 ist eine Eingabeeinrichtung 20 vorgesehen, in welche eine Kassette 40 mit einer darin befindlichen Speicherleuchtstoffplatte 1 von einer Bedienperson eingegeben werden kann. Die Eingabe erfolgt bei dem hier gezeigten Beispiel im Wesentlichen in horizontaler Richtung, wobei die Kassette 40 bei ihrer Eingabe im Wesentlichen horizontal orientiert ist. Grundsätzlich ist es aber auch möglich, die Eingabeeinrichtung 20 an einer anderen Stelle des Gehäuses 13, beispielsweise an dessen Oberseite oder in einem Übergangsbereich zwischen der Oberseite und dem vorderen Bereich, anzuordnen, wobei die Kassette 40 dann in vertikaler Richtung bzw. in einer gegenüber der Vertikalen geneigte Richtung in die Eingabeeinrichtung 20 eingegeben werden kann.

Im Inneren des Gehäuses 13 der Vorrichtung 12 ist in der Nähe der Eingabeeinrichtung 20 eine Entnahmeeinrichtung 14 vorgesehen, die in der hier gewählten Darstellung nur stark vereinfacht wiedergegeben ist und dazu dient, die in der eingegebenen Kassette 40 befindliche Speicherleuchtstoffplatte 1 aus der Kassette 40 zu entnehmen und diese in Transportrichtung T zur Walze 10 der Ausleseeinrichtung zu befördern. Die Entnahmeeinrichtung 14 dient ferner dazu, die Speicherleuchtstoffplatte 1 nach dem Auslesen in der Ausleseeinrichtung in der der Transportrichtung T entgegengesetzten Rücktransportrichtung wieder zurück in die Kassette 40 zu befördern.

Der Transport bzw. Rücktransport der Speicherleuchtstoffplatte 1 im Gehäuse 13 erfolgt im Wesentlichen entlang einer Transportstrecke 15, welche über den hinteren Bereich des Gehäuses 13 hinausragt. Der hintere Bereich des Gehäuses 13 weist daher im Bereich der Transportstrecke 15 eine entsprechende Öffnung auf, durch welche hindurch die Speicherleuchtstoffplatte 1 aus dem Gehäuse 13 zumindest teilweise heraustransportiert werden kann.

Um den aus dem Gehäuse 13 der Vorrichtung 12 herausragenden Teil der Speicherleuchtstoffplatte 1 vor der Einwirkung von Umgebungslicht zu schützen und insbesondere ein Eindringen von Umgebungslicht durch die in diesem Bereich vorgesehene Öffnung des Gehäuses 13 in das Innere der Vorrichtung 12 zu vermeiden, ist eine Lichtabdeckung 16 vorgesehen, welche das hintere Ende der Transportstrecke 15 lichtdicht verschließt. Insbesondere verhindert die Lichtabdeckung 16 ein Eindringen von Umgebungslicht in das Innere des Gehäuses 13, während die Speicherleuchtstoffplatte 1 entlang der Transportstrecke 15 transportiert und/oder ausgelesen wird.

Figur 3 zeigt einen Querschnitt der bzw. des in Figur 2 dargestellten Vorrichtung 12 bzw. Systems bei abgenommener Eingabeeinrichtung 20 und Lichtabdeckung 16.

Eine Abnahme der Eingabeeinrichtung 20 vom Gehäuse 13 der Vorrichtung 12 kann beispielsweise dann erforderlich sein, wenn bei einem Störfall die in der Kassette 40 befindliche Speicherleuchtstoffplatte 1 mit Hilfe der Entnahmeeinrichtung 14 nicht oder nur teilweise aus der Kassette 40 entnommen werden kann oder eine Übergabe der entnommenen Speicherleuchtstoffplatte 1 an die Walze 10 fehlschlägt. Ein solcher Störfall wird von der Steuerungs- und Überwachungselektronik der Vorrichtung 12 erkannt und durch Ausgabe eines entsprechenden Warnsignals, beispielsweise in Form einer Leuchtanzeige und/oder eines Tons, angezeigt. Der Bedienperson wird hierdurch signalisiert, dass ein Störfall, insbesondere ein sogenannter Plattenstau, im vorderen Bereich der Vorrichtung 12 vorliegt, welcher durch Abnahme der Entnahmeeinrichtung 20 zu beheben ist. Durch Betätigung eines am Gehäuse 13 und/oder an der Eingabeeinrichtung 20 vorgesehenen Entriegelungsmechanismus wird die Eingabeeinrichtung 20 vom Gehäuse 13 der Vorrichtung 12 gelöst und kann von der Bedienperson abgenommen werden. Der Plattenstau kann dann behoben werden, indem beispielsweise eine nur teilweise aus der Kassette 40 entnommene Speicherleuchtstoffplatte 1, wie in Figur 3 angedeutet, wieder vollständig zurück in die Kassette 40 geschoben wird. Nach Behebung des Plattenstaus wird die Eingabeeinrichtung 20 wieder mit dem Gehäuse 13 der Vorrichtung verbunden, insbesondere in dieses eingesteckt und arretiert.

Bei einem weiteren möglichen Störfall kommt die Speicherleuchtstoffplatte 1 im Bereich des der Eingabeeinrichtung 20 gegenüber liegenden hinteren Endes der Transportstrecke 15 zu liegen und kann mittels vorhandener Transporteinrichtungen, insbesondere mittels der Walze 10, nicht mehr aus dieser Position wegbefördert werden. Auch dieser Störfall wird vorzugsweise durch eine am Gehäuse 13 der Vorrichtung 12 vorgesehene Anzeigeeinrichtung oder durch ein entsprechendes Tonsignal gemeldet, woraufhin die Bedienperson die Lichtabdeckung 16 im Bereich des hinteren Endes der Transportstrecke 15 vom Gehäuse 13 abnimmt, wie in Figur 3 dargestellt. Die Lichtabdeckung 16 ist vorzugsweise mittels Form- und/oder Reibschluss mit dem Gehäuse 13 verbindbar. Vorzugsweise werden hierbei einfach und schnell zu betätigende Verbindungselemente, wie z.B. Splinte, Steck- oder Schnappmechanismen, verwendet.

Die Vorrichtung 12 ist hierbei in der Weise gesteuert, dass bei abgenommener Lichtabdeckung 16 kein Transport der Speicherleuchtstoffplatte 1 mehr durch die Walze 10 und/oder das Entnahmeelement 14 erfolgt. Insbesondere wird die Speicherleuchtstoffplatte 1 nicht mehr ausgelesen, sobald die Lichtabdeckung 16 vom Gehäuse 13 abgenommen worden ist.

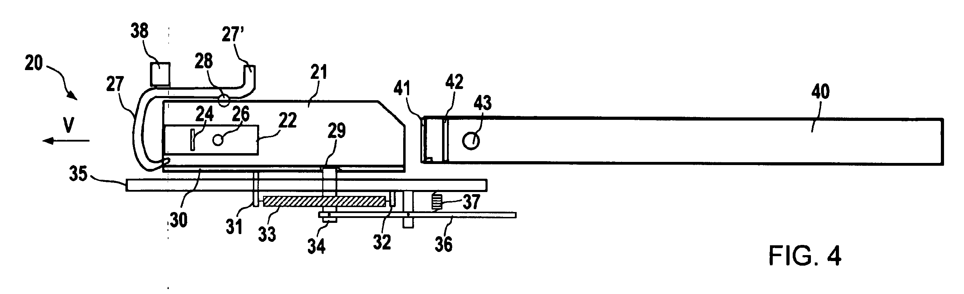

Die Eingabeeinrichtung 20 ist erfindungsgemäß so ausgestaltet, dass die in die Eingabeeinrichtung 20 durch eine Bedienperson eingegebene Kassette 40 in der Eingabeeinrichtung 20 arretiert, insbesondere geklemmt, und/oder geöffnet wird, wobei für das Arretieren bzw. Öffnen der Kassette 40 mechanische Elemente vorgesehen sind, welche rein mechanisch, nämlich durch die in die Eingabeeinrichtung 20 eingeführte Kassette 40, angetrieben und/oder betätigt werden, ohne dass zusätzliche elektrische oder elektromechanische Antriebs- oder Betätigungselemente, wie z.B. Elektromotoren, erforderlich sind. Dies wird anhand der Figuren 4 bis 9 im Folgenden näher erläutert.

Figur 4 zeigt eine Seitenansicht einer Eingabeeinrichtung 20 sowie einer Kassette 40. Die Kassette 40 weist an einem stirnseitigen Ende eine Öffnung auf, welche durch eine schwenkbare Klappe 41 verschließbar ist. Im dargestellten geschlossenen Zustand ist die Klappe 41 mittels eines in der Kassette 40 vorgesehenen Verriegelungsschiebers (nicht dargestellt) verriegelt, so dass sich diese nicht selbsttätig öffnen kann.

Vorzugsweise ist der Verriegelungsschieber in der in der europäischen Patentschrift EP 1 531 359 B1 beschriebenen Weise ausgestaltet und weist eine längliche Schiene mit einer oder mehreren Verriegelungsöffnungen auf, die bei geschlossener Klappe 41 mit entsprechenden, an der Innenseite der Klappe 41 vorgesehenen Erhebungen in Eingriff gebracht werden können, wodurch die Klappe 41 verriegelt wird.

Die jeweilige Position des Verriegelungsschiebers relativ zu den Erhebungen an der Innenseite der Klappe 41 und das damit verbundene Eingreifen bzw. Nichteingreifen in die Erhebungen wird über ein mit dem Verriegelungsschieber gekoppeltes und von außen betätigbares Betätigungselement 43 gesteuert. Vorzugsweise werden der Verriegelungsschieber und die Erhebungen an der Innenseite der Klappe 41 außer Eingriff gebracht und damit die Klappe 41 entriegelt, wenn das Betätigungselement 43 von außen gedrückt wird. Wird das Betätigungselement 43 wieder losgelassen, so nimmt dieses seine ursprüngliche Position selbsttätig ein und bewirkt, dass der Verriegelungsschieber wieder in Eingriff mit den an der Klappe 41 vorgesehenen Erhebungen kommt.

An vorzugsweise zwei Schmalseiten der Kassette 40 ist in der Nähe der Öffnung der Kassette 40 jeweils eine Nut 42 vorgesehen, mittels welcher die Kassette 40 in der Eingabeeinrichtung 20 in einer definierten Position arretiert werden kann.

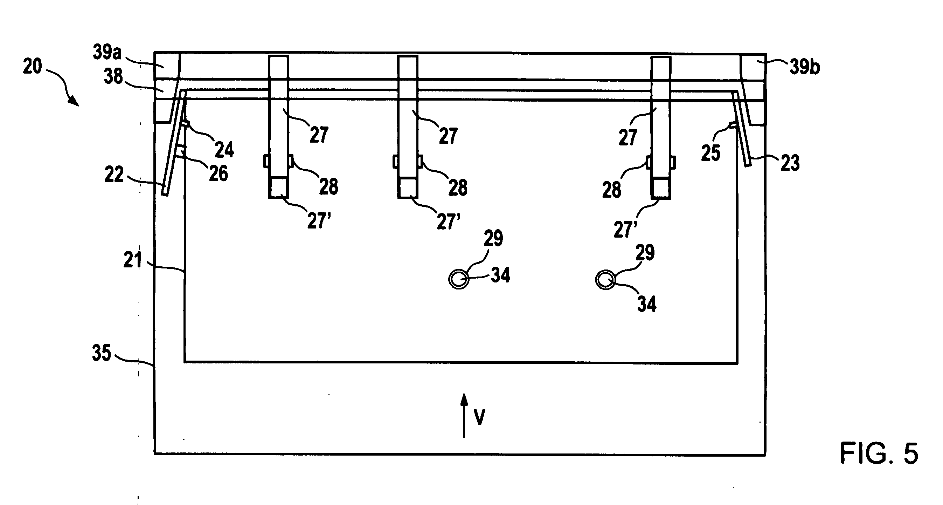

Die Eingabeeinrichtung 20, die nachfolgend unter gleichzeitiger Bezugnahme auf die Figuren 4 und 5 näher beschrieben wird, weist einen Wagen 21 auf, welcher auf einem Träger 35 verschiebbar gelagert ist. An der Unterseite der Grundplatte 30 des Wagens 21 ist ein Stift 31 angeordnet, welcher durch eine in der Grundplatte des Trägers 35 vorgesehene Nut hindurch geführt ist und über eine Zugfeder 33 mit einem an der Unterseite der Grundplatte des Trägers 35 angeordneten Stift 32 gekoppelt ist. Im Falle eines Verschiebens des Wagens 21 in Verschieberichtung V wird die Zugfeder 33 gespannt, wobei entgegen der Verschieberichtung V gerichtete Rückstellkräfte erzeugt werden.

Ferner sind Arretierbolzen 34 vorgesehen, welche durch einen Durchbruch in der Grundplatte des Trägers 35 hindurch geführt werden und in an der Grundplatte 30 des Wagens 21 vorgesehene Ausnehmungen 29 eingreifen können. Die Arretierbolzen 34 sind über einen Hebel 36 an der Unterseite der Grundplatte des Trägers 35 gelagert, wobei auf der den Arretierbolzen 34 gegenüberliegenden Seite des Hebels 36 eine Druckfeder 37 dafür sorgt, dass die Arretierbolzen 34 bei unbetätigtem Hebel 36 in Richtung des Wagens 21, insbesondere in die Ausnehmung 29 hinein, bewegt werden.

Jede der Ausnehmungen 29 ist hierbei vorzugsweise so gestaltet, dass ein Verschieben des Wagens 21 entgegen der Verschieberichtung V nicht möglich ist, wenn der Arretierbolzen 34 in die Ausnehmung 29 eingreift. Dies wird vorzugsweise durch eine im Wesentlichen vertikal verlaufende Flanke im Bereich der linken Seite der Ausnehmung 29 erreicht. Alternativ oder zusätzlich kann die rechte Seite der Ausnehmung 29 derart ausgestaltet sein, dass bei einer Verschiebung des Wagens 21 in Verschieberichtung V der Arretierbolzen 34 nach unten gedrückt wird und somit den Wagen 21 für eine Verschiebung in Verschieberichtung V frei gibt. Dies wird vorzugsweise dadurch erreicht, dass die Flanke im Bereich der rechten Seite der Ausnehmung 29 eine Abschrägung aufweist, die gegenüber der Vertikalen, vorzugsweise um einen Winkel zwischen 20° und 70°, insbesondere zwischen 35° und 55°, in Verschieberichtung geneigt ist.

In den vorderen Seitenbereichen des Wagens 21 sind ein erster Hebel 22 sowie ein zweiter Hebel 23 vorgesehen, deren relative Lage zum jeweiligen Seitenbereich des Wagens 21 veränderbar ist. Vorzugsweise sind die beiden Hebel 22 und 23 mit ihrem bezüglich der Verschieberichtung V vorderen Ende am Wagen 21 schwenkbar gelagert. Grundsätzlich ist es aber auch möglich, die Hebel 22 bzw. 23 in der Weise an den Seitenbereichen des Wagens 21 zu lagern, dass diese durch eine Linearbewegung auf den Wagen zu bzw. von diesem weg bewegt werden.

Im vorliegenden Beispiel ist am ersten und zweiten Hebel 22 bzw. 23 jeweils eine längliche Erhebung 24 bzw. 25 vorgesehen, welche derart ausgestaltet und am ersten bzw. zweiten Hebel 22 bzw. 23 derart angeordnet ist, dass diese in die an den beiden Schmalseiten der Kassette 40 vorgesehenen Nuten 42 eingreifen können, wenn die Kassette 40 bis zum Anschlag in den Wagen 21 geschoben wird.

Am ersten Hebel 22 ist ferner ein Entriegelungsbolzen 26 vorgesehen, welcher in Form und Größe so ausgestaltet und am ersten Hebel 22 derart angeordnet ist, dass dieser bei eingeschobener Kassette 40 das an der Schmalseite der Kassette 40 vorgesehene Betätigungselement 43 betätigen, insbesondere eindrücken, kann.

Am Wagen 21 sind ferner hakenförmige Öffnungselemente 27 über Gelenke 28 schwenkbar gelagert. Die Öffnungselemente 27 sind so geformt, dass sie mit einem vorderen Ende, welches greiferartig ausgestaltet ist, in den vorderen Bereich des Wagens 21 eingreifen können. Am hinteren Ende der Öffnungselemente 27 ist jeweils ein im Wesentlichen vertikal verlaufender Vorsprung 27' ausgeformt.

Etwa auf der Höhe des vertikal verlaufenden Vorsprungs 27' ist ein schienenförmiger Anschlag 38 vorgesehen, welcher Teil des Trägers 35 ist und vorzugsweise mit der Grundplatte des Trägers 35 verbunden ist. Entsprechende Verbindungselemente, beispielsweise vertikal verlaufende Streben zwischen dem Anschlag 38 und dem Träger 35, wurden in der gewählten Darstellung aus Anschaulichkeitsgründen weggelassen.

Am Träger 35, insbesondere an der Grundplatte des Trägers 35, sind ein erster Keil 39a sowie ein zweiter Keil 39b angeordnet und derart ausgestaltet, dass diese den ersten bzw. zweiten Hebel 22 bzw. 23 betätigen können, wenn der Wagen 21 aus der in den Figuren 4 und 5 gezeigten Position in Verschieberichtung V verschoben wird.

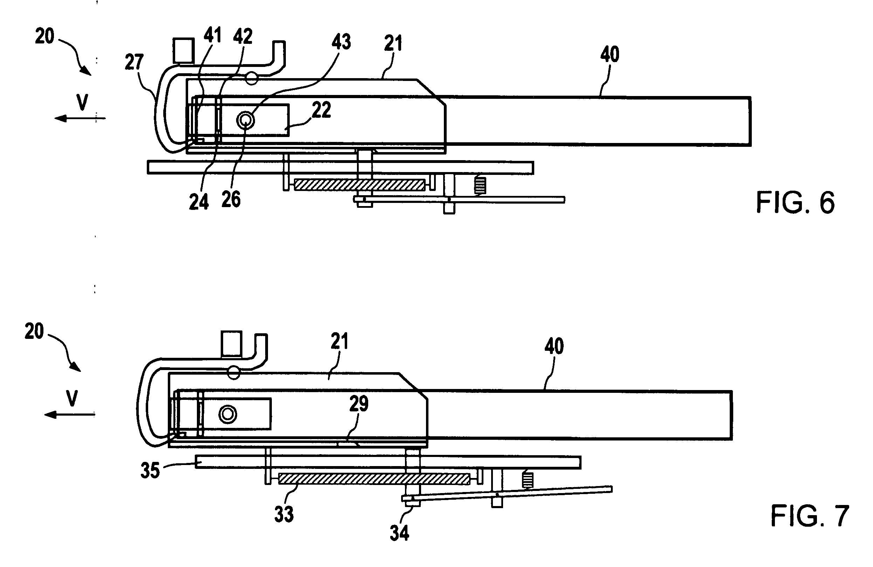

Fig. 6 zeigt eine Seitenansicht der Eingabeeinrichtung 20 bei eingegebener Kassette 40 in einer ersten Phase der Eingabe. Die Kassette 40 wurde von einer Bedienperson in den Wagen 21 der Eingabeeinrichtung 20 so weit eingeschoben, bis die Kassette 40 an einem im Bereich des vorderen Endes des Wagens 21 vorgesehenen Anschlag (nicht dargestellt) anliegt.

In dieser Position kommen die Nut 42 sowie das Betätigungselement 43 im Seitenbereich der Kassette 40 in etwa auf der Höhe der am ersten Hebel 22 bzw. zweiten Hebel 23 (vgl. Fig. 5) vorgesehenen länglichen Erhebungen 24 bzw. 25 sowie des Entriegelungsbolzens 26 zu liegen. Ferner greifen die Öffnungselemente 27 mit ihren greiferförmigen Enden in an der Klappe 41 der Kassette 40 vorgesehene Ausnehmungen ein. Im Übrigen gelten die obenstehenden Ausführungen im Zusammenhang mit den Figuren 4 und 5 entsprechend.

Fig. 7 zeigt eine Seitenansicht der Eingabeeinrichtung 20 bei eingegebener Kassette 40 in einer zweiten Phase der Eingabe, in welcher die Kassette 40 zusammen mit dem Wagen 21 durch die Bedienperson so weit in Verschieberichtung V geschoben worden ist, dass der Arretierbolzen 34 und die in der Grundplatte 30 des Wagens 21 vorgesehene Ausnehmung 29 außer Eingriff gebracht worden sind, indem der Arretierbolzen 34 von der schräg ausgebildeten Flanke der Ausnehmung 29 vertikal nach unten gedrückt worden ist. Aufgrund der durch die Verschiebung bewirkte Relativbewegung zwischen dem Wagen 21 und dem Träger 35 wird die Zugfeder 33 gespannt.

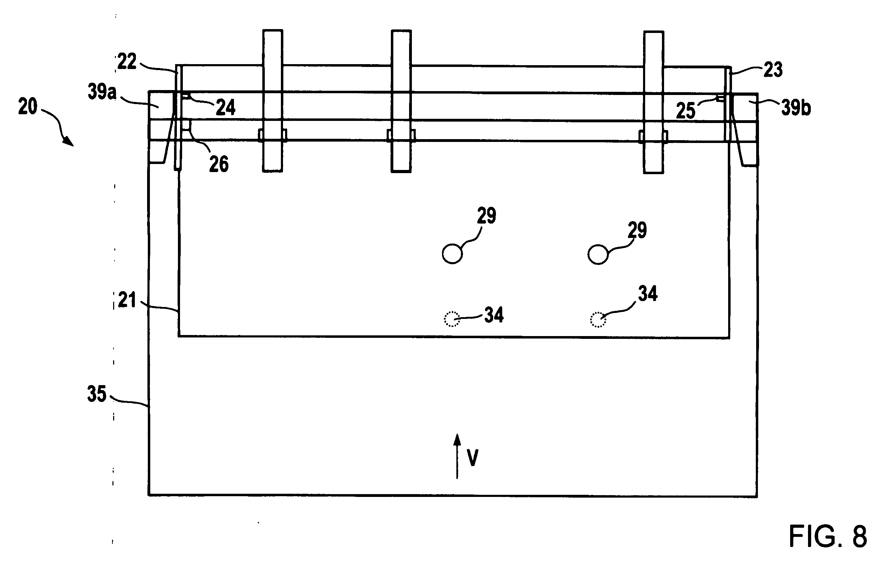

Fig. 8 zeigt eine Draufsicht auf die Eingabeeinrichtung 20 in der in Fig. 7 gezeigten zweiten Phase der Eingabe, wobei jedoch aus Anschaulichkeitsgründen die eingegebene Kassette weggelassen wurde. Wie aus Fig. 8 ersichtlich ist, stehen die Arretierbolzen 34 außer Eingriff mit den Ausnehmungen 29 im Wagen 21.

Aufgrund der Verschiebung des Wagens 21 in Verschieberichtung V werden der am Wagen 21 beweglich, insbesondere schwenkbar, gelagerte erste Hebel 22 und zweite Hebel 23 in Richtung auf die in den Wagen 21 eingeschobene Kassette 40 (nicht dargestellt) zu bewegt, so dass die länglichen Erhebungen 24 und 25 in die entsprechenden Nuten 42 in den Seitenbereichen der Kassette 40 eingreifen und die Kassette 40 dadurch in ihrer Position relativ zum Wagen 21 arretieren oder fixieren.

Darüber hinaus drückt der am ersten Hebel 22 vorgesehene Entriegelungsbolzen 26 auf das im Seitenbereich der Kassette 40 befindliche Betätigungselement 43, durch welches der in der Kassette 40 befindliche Verriegelungsschieber die durch diesen zunächst verriegelte Klappe 41 freigibt, wie bereits im Zusammenhang mit Fig. 4 ausführlich erläutert wurde.

Die durch die Verschiebung der Kassette 40 zusammen mit dem Wagen 21 verursachte Bewegung des ersten und zweiten Hebels 22 und 23 in Richtung der Kassette 40 wird in dem hier dargestellten Ausführungsbeispiel dadurch realisiert, dass der erste und zweite Hebel 22 bzw. 23 an jeweils einer Keilfläche des ersten bzw. zweiten Keils 39a bzw. 39b entlanggeführt werden, bis diese schließlich durch die parallel zur Verschieberichtung V verlaufenden Flächen am vorderen Ende der Keile 39a und 39b in der in Fig. 8 gezeigten Stellung gehalten werden. Vorzugsweise sind die Hebel 22 und 23 mit Rückstellfedern (nicht dargestellt) gekoppelt, welche eine selbsttätige Rückstellung der Hebel 22 und 23 bewirken, wenn der Wagen 21 sich wieder in einer in den Figuren 4 bis 6 gezeigten Ausgangsposition befindet.

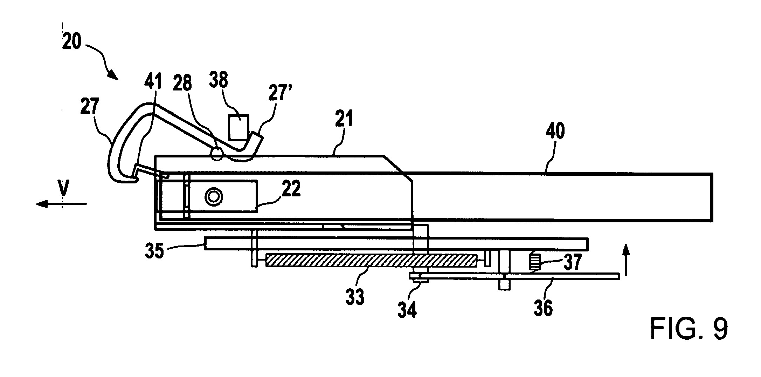

Fig. 9 zeigt eine Seitenansicht der Eingabeeinrichtung 2 in einer dritten Phase der Eingabe, bei welcher die Kassette 40-zusammen mit dem Wagen 21 von der Bedienperson weiter in Verschieberichtung V geschoben worden ist, wobei die Öffnungselemente 27 durch ein Zusammenwirken der vertikalen Vorsprünge 27' mit dem am Träger 35 vorgesehenen schienenförmigen Anschlag 38 um ihre Gelenke 28 gekippt werden und dabei aufgrund ihres Eingreifens in entsprechende Öffnungen in der Klappe 41 diese öffnen. Die in der Kassette 40 befindliche Speicherleuchtstoffplatte 1 (vgl. Fig. 2) kann dann durch ein entsprechendes Entnahmeelement 14 aus der Kassette 40 entnommen und nach dem Auslesen wieder in diese zurückbefördert werden.

In der in Fig. 9 gezeigten dritten Phase liegt der Arretierbolzen 34 am hinteren Ende der Grundplatte 30 des Wagens 21 an, so dass der Wagen 21 trotz der noch stärker gespannten Zugfeder 33 nicht selbsttätig entgegen der Vorschubrichtung V zurückfahren kann, sondern in der in Figur 9 gezeigten Position arretiert wird. Der Arretierbolzen 34 bewegt sich hierbei aufgrund der durch die Druckfeder 37 erzeugten Rückstellkraft selbsttätig von der in Figur 7 gezeigten Entarretierungsstellung in die in Fig. 9 gezeigte Verriegelungs- oder Arretierungsstellung.

Durch die Arretierung des Wagens 21 in der in Figur 9 gezeigten Position wird gleichzeitig die relative Lage der Keile 39a und 39b bezüglich der Hebel 22 und 23 sowie des schienenförmigen Anschlags 38 bezüglich der vertikalen Vorsprünge 27' der Öffnungselemente 27 arretiert, so dass die Kassette 40 in der in Figur 9 gezeigten Phase bei geöffneter Klappe 41 im Wagen 21 fixiert bleibt.

Nach der Entnahme, dem Auslesen und der Rückführung der Speicherleuchtstoffplatte 1 zurück in die Kassette 40 kann der Hebel 36 von der Bedienperson vertikal nach oben gezogen werden, so dass das andere Ende des Hebels 36 den Verriegelungsbolzen 34 aus der in Fig. 9 gezeigten Verriegelungsstellung herausbewegt. Der Wagen 21 wird dann durch die von der gespannten Zugfeder 33 erzeugten Rückstellkräfte selbsttätig entgegen der Verschieberichtung V bewegt, wobei die Öffnungselemente 27, welche vorzugsweise zusätzlich mit (nicht dargestellten) Federelementen vorgespannt sind, zunächst wieder aus der in Figur 9 gezeigten Stellung in die in Figur 7 gezeigte Stellung zurückbewegt werden und dabei die Klappe 41 der Kassette 40 schließen.

Bei fortgesetzter Rückwärtsbewegung entgegen der Verschieberichtung V wird schließlich wieder die in Fig. 6 gezeigte Phase erreicht, in welcher die Hebel 22 und 23 wieder von der Kassette 40 weg bewegt worden sind, so dass der Entriegelungsbolzen 26 vom Betätigungselement 43 entkoppelt ist, wodurch die geschlossene Klappe 41 durch den in der Kassette 40 befindlichen Verriegelungsschieber wieder verriegelt wird. Ferner stehen die länglichen Erhebungen 24 und 25 an den Hebeln 22 bzw. 23 wieder außer Eingriff mit den Nuten 42 an der Kassette 40 (siehe auch Fig. 5), so das die Kassette 40 von der Bedienperson aus dem Wagen 21 der Eingabeeinrichtung 20 herausgenommen werden kann.

Wie vorstehend anhand der Figuren 4 bis 9 dargelegt worden ist, wird die Fixierung oder Arretierung der Kassette 40, die Entriegelung der Klappe 41 sowie deren Öffnung bei der beschriebenen Eingabeeinrichtung 20 ausschließlich durch mechanische Mittel bewerkstelligt, indem ein Teil der bei der Eingabe der Kassette 40 in die Eingabeeinrichtung 20 von einer Bedienperson aufgebrachte mechanische Energie zum mittelbaren oder unmittelbaren Antreiben mechanischer Betätigungselemente in Form der Hebel 22 und 23 einschließlich der Erhebungen 24 und 25 sowie des Entriegelungsbolzens 26 und des Öffnungselements 27 verwendet wird. Ein weiterer Teil der von der Bedienperson aufgebrachten Energie wird zum Spannen der Zugfeder 33 verwendet, durch welche der bei der Eingabe der Kassette 40 vollzogene Ablauf selbsttätig in umgekehrter Reihenfolge erfolgen kann, nachdem durch die Bedienperson lediglich der Hebel 36 betätigt worden ist. Dies bedeutet, dass die Bedienperson bei der Entnahme der in die Eingabeeinrichtung 20 eingegebenen Kassette 40 aus der Eingabeeinrichtung 20 praktisch keine zusätzliche Kraft bzw. Energie mehr aufzuwenden braucht.

## Patentansprüche

1. Vorrichtung zum Auslesen von in einer Speicherleuchtstoffplatte (1) gespeicherten Röntgeninformationen mit
einer Eingabeeinrichtung (20), in welche eine Kassette (40) mit einer darin befindlichen Speicherleuchtstoffplatte (1) eingegeben werden kann, einer Ausleseeinrichtung (2, 3 - 7), in welcher die Speicherleuchtstoffplatte (1) mit Stimulationslicht (3, 3') bestrahlt und das hierbei in der Speicherleuchtstoffplatte (1) angeregte Emissionslicht erfasst werden kann, und
mindestens einem mechanischen Element (22 - 28), welches durch eine Bewegung der Kassette (40) bei deren Eingabe in die Eingabeeinrichtung (20) mechanisch angetrieben werden kann und dabei die Kassette (40) in der Eingabeeinrichtung (20) arretieren und/oder öffnen bzw. entriegeln kann,
**dadurch gekennzeichnet, dass**
die Eingabeeinrichtung (20) einen Träger (35) und einen Wagen (21) aufweist, wobei der Wagen (21) die Kassette (40) aufnehmen kann und bei aufgenommener Kassette (40) relativ zum Träger (35) bewegt werden kann,und
mindestens ein Spannelement (33), insbesondere eine Zugfeder oder Druckfeder, vorgesehen ist, über welches der Wagen (21) mit dem Träger (35) gekoppelt ist, so dass bei einem Verschieben des Wagens (21) relativ zum Träger (35) in Verschieberichtung (V) das Spannelement (33) gespannt wird, wobei entgegen der Verschieberichtung (V) gerichtete Rückstellkräfte erzeugt werden, durch welche sich der Wagen (21) selbsttätig entgegen der Verschieberichtung (V) bewegen kann und dabei eine selbsttätige Entarretierung der Kassette bzw. ein selbsttätiges Schließen bzw. Verriegeln der Kassette bewirkt.

2. Vorrichtung nach Anspruch 1, wobei die Bewegung der Kassette (40) bei deren Eingabe in die Eingabeeinrichtung (20) eine von einer Bedienperson ausgeführte Bewegung, insbesondere eine Schubbewegung, ist.

3. Vorrichtung nach Anspruch 1 oder 2, wobei als mechanisches Element (22 - 28) mindestens ein Hebel (22 - 25) oder ein Hebelsystem vorgesehen ist, welcher bzw. welches durch die Bewegung der Kassette (40) bei deren Eingabe in eine Stellung gebracht werden kann, in welcher der Hebel (22 - 25) bzw. das Hebelsystem die Kassette (40) in einer vorgegebenen Position arretiert.

4. Vorrichtung nach einem der vorangehenden Ansprüche, wobei als mechanisches Element (22 - 28) mindestens ein Entriegelungselement (26) vorgesehen ist, welches durch die Bewegung der Kassette (40) bei deren Eingabe in eine Stellung gebracht werden kann, in welcher das Entriegelungselement (26) einen an der Kassette (40) vorgesehenen Verschluss (41) entriegeln kann.

5. Vorrichtung nach einem der vorangehenden Ansprüche, wobei als mechanisches Element (22 - 28) mindestens ein Öffnungselement (27, 28) vorgesehen ist, welches durch die Bewegung der Kassette (40) bei deren Eingabe in eine Stellung gebracht werden kann, in welcher das Öffnungselement (27, 28) einen an der Kassette (40) vorgesehenen Verschluss (41) öffnen kann.

6. Vorrichtung nach einem der vorangehenden Ansprüche mit einer Arretiermechanik (21, 29 - 39), durch welche das mindestens eine mechanische Element (22 - 28) in der Stellung, in welcher das mechanische Element (22 - 28) die Kassette (40) in der vorgegebenen Position arretiert bzw. den Verschluss (41) entriegelt bzw. öffnet, arretiert und wieder von dieser Stellung gelöst werden kann.

7. Vorrichtung nach einem der vorangehenden Ansprüche, wobei der Wagen (21) am Träger (35) beweglich gelagert ist.

8. Vorrichtung nach einem der vorangehenden Ansprüche, wobei das mindestens eine mechanische Element (22 - 28) am Wagen (21) angeordnet ist und zusammen mit diesem relativ zum Träger (35) bewegt werden kann.

9. Vorrichtung nach Anspruch 8, wobei am Träger (35) ein oder mehrere Leitelemente (38, 39) vorgesehen sind, durch welche bei der Bewegung des Wagens (21) relativ zum Träger (35) die Stellung des mindestens einen mechanischen Elements (22 - 28) verändert werden kann.

10. System zum Auslesen von in einer Speicherleuchtstoffplatte (1) gespeicherten Röntgeninformationen mit einer Kassette (40) zur Aufnahme einer Speicherleuchtstoffplatte (1),
**gekennzeichnet durch**
eine Vorrichtung nach einem der vorangehenden Ansprüche.

11. System nach Anspruch 10, wobei die Kassette (40) eine Öffnung und einen Verschluss (41), insbesondere eine schwenkbare Klappe, zum Verschließen der Öffnung aufweist.

12. System nach Anspruch 11, wobei die Kassette (40) ein Verriegelungselement aufweist, durch welches der Verschluss (41) in einer die Öffnung verschließenden Stellung gehalten, insbesondere verriegelt, werden kann, wobei das Verriegelungselement von außerhalb der Kassette (40) betätigt werden kann.

13. Verfahren zum Auslesen von in einer Speicherleuchtstoffplatte (1) gespeicherten Röntgeninformationen mit folgenden Schritten:
Eingabe einer Kassette (40) mit einer darin befindlichen Speicherleuchtstoffplatte (1) in eine Eingabeeinrichtung (20) und
Bestrahlen der Speicherleuchtstoffplatte (1) mit Stimulationslicht (3, 3') und Erfassen des hierbei in der Speicherleuchtstoffplatte (1) angeregten Emissionslichts,
wobei mindestens ein mechanisches Element (22 - 28) durch eine Bewegung der Kassette (40) bei deren Eingabe in die Eingabeeinrichtung (20) mechanisch angetrieben wird und dabei die Kassette (40) in der Eingabeeinrichtung (20) arretiert und/oder öffnet bzw. entriegelt,
**dadurch gekennzeichnet, dass**
die Eingabeeinrichtung (20) einen Träger (35) und einen Wagen (21) aufweist, wobei der Wagen (21) die Kassette (40) aufnimmt und bei aufgenommener Kassette (40) relativ zum Träger (35) bewegt wird, und der Wagen (21) mit dem Träger (35) über mindestens ein Spannelement (33), insbesondere eine Zugfeder oder Druckfeder, gekoppelt ist, so dass bei einem Verschieben des Wagens (21) relativ zum Träger (35) in Verschieberichtung (V) das Spannelement (33) gespannt wird, wobei entgegen der Verschieberichtung (V) gerichtete Rückstellkräfte erzeugt werden, durch welche sich der Wagen (21) selbsttätig entgegen der Verschieberichtung (V) bewegt und dabei eine selbsttätige Entarretierung der Kassette bzw. ein selbsttätiges Schließen bzw. Verriegeln der Kassette bewirkt.

## Claims

1. A device for reading out X-ray information stored in a storage phosphor plate (1), comprising
an input device (20) into which a cassette (40) containing a storage phosphor plate (1) can be loaded,
a read-out device (2, 3 - 7) in which the storage phosphor plate (1) can be irradiated with stimulating light (3, 3') and in which the emission light which is thereby stimulated in the storage phosphor plate (1) can be detected, and
at least one mechanical element (22 - 28) which can be mechanically driven by a movement of the cassette (40) while the latter is being loaded into the input device (20) and which can thereby lock the cassette (40) in the input device (20) and/or open or unlatch the cassette (40),
**characterized in that**
the input device (20) comprises a support (35) and a carriage (21), whereby the carriage (21) can receive the cassette (40) und can be moved relative to the support (35) after having received the cassette (40), and
provision is made of at least one tensioning element (33), in particular a tension spring or pressure spring, by means of which the carriage (21) is coupled to the support (35), so that a shifting of the carriage (21) relative to the support (35) in the shifting direction (V) loads the tensioning element (33), whereby restoring forces oriented in a direction opposite to the shifting direction (V) are generated that allow the carriage (21) to move automatically in a direction opposite to the shifting direction (V), triggering thereby, respectively, an automatic unlocking of the cassette and/or an automatic closure of the cassette and/or an automatic latching of the cassette.

2. The device according to claim 1, wherein the movement of the cassette (40) being loaded into the input device (20) is a movement carried out by an operator, in particular a translatory movement.

3. The device according to claim 1 or 2, wherein the mechanical element (22 - 28) is provided in the form of at least one lever (22 - 25) or a lever system that, by the movement of the cassette (40) being loaded, can be brought into a position in which the lever (22 - 25) or lever system locks the cassette (40) in a predetermined position.

4. The device according to any one of the preceding claims, wherein the mechanical element (22 - 28) is provided in the form of at least one unlatching element (26) that, by the movement of the cassette (40) being loaded, can be brought into a position in which the unlatching element (26) can unlatch a closure (41) provided at the cassette (40).

5. The device according to any one of the preceding claims, wherein the mechanical element (22 - 28) is provided in the form of at least one opening element (27, 28) that, by the movement of the cassette (40) being loaded, can be brought into a position in which the opening element (27, 28) can open a closure (41) provided at the cassette (40).

6. The device according to any one of the preceding claims, comprising a locking mechanism (21, 29 - 39) which allows the at least one mechanical element (22 - 28) to be blocked in the position in which the mechanical element (22 - 28) respectively locks the cassette (40) in the predetermined position and unlatches and opens the closure (41), and to be released again from said position.

7. The device according to any one of the preceding claims, wherein the carriage (21) is movably mounted at the support (35).

8. The device according to any one of the preceding claims, wherein the at least one mechanical element (22 - 28) is disposed at the carriage (21) and can be moved, together with the carriage (21), relative to the support (35).

9. The device according to claim 8, wherein one or more guiding elements (38, 39) are provided at the support (35) that allow to modify the position of the at least one mechanical element (22 - 28) while the carriage (21) is being moved relative to the support (35).

10. System for reading out X-ray information stored in a storage phosphor plate (1), comprising a cassette (40) for receiving a storage phosphor plate (1),
**characterized by**
a device according to any one of the preceding claims.

11. System according to claim 10, wherein the cassette (40) comprises an opening and a closure (41), in particular a pivotable flap, for sealing off the opening.

12. System according to claim 11, wherein the cassette (40) comprises a latching element that is able to keep, in particular to latch, the closure (41) in a position which seals off the opening, said locking element being actuable from outside the cassette (40).

13. Method for reading out X-ray information stored in a storage
phosphor plate (1), comprising the following steps :
loading a cassette (40) containing a storage phosphor plate (1) in an input device (20) and
irradiating the storage phosphor plate (1) with stimulating light (3, 3') and detecting the emission light which is thereby stimulated in the storage phosphor plate (1),
wherein at least one mechanical element (22 - 28) is mechanically driven by a movement of the cassette (40) while the latter is being loaded into the input device (20) and thereby blocks and/or opens or unlocks the cassette (40) in the input device (20),
**characterized in that**
the input device (20) comprises a support (35) and a carriage (21), whereby the carriage (21) receives the cassette (40) and is moved relative to the support (35) after having received the cassette (40), and
the carriage (21) is coupled to the support (35) by means of at least one tensioning element (33), in particular a tension spring or pressure spring, so that a shifting of the carriage (21) relative to the support (35) in the shifting direction (V) loads the tensioning element (33), whereby restoring forces oriented in a direction opposite to the shifting direction (V) are generated that make the carriage (21) move automatically in a direction opposite to the shifting direction (V), triggering thereby, respectively, an automatic unlocking of the cassette, an automatic closure of the cassette or an automatic latching of the cassette.

## Revendications

1. Dispositif destiné à la lecture d'informations radiographiques stockées dans une plaque luminescente à mémoire (1), comprenant un dispositif d'insertion (20) dans lequel peut être introduite une cassette (40) contenant une plaque luminescente à mémoire (1),
un dispositif de lecture (2, 3 - 7) dans lequel la plaque luminescente à mémoire (1) peut être irradiée avec de la lumière de stimulation (3, 3') et dans lequel peut être captée la lumière d'émission stimulée dans la plaque luminescente à mémoire (1) lors de cette irradiation, et
au moins un élément mécanique (22 - 28) pouvant être entrainé mécaniquement par un mouvement de la cassette (40) lorsque celle-ci est introduite dans le dispositif d'insertion (20) et pouvant ainsi bloquer et/ou ouvrir et déverrouiller la cassette (40) dans le dispositif d'insertion (20),
**caractérisé en ce que**
le dispositif d'insertion (20) comprend un support (35) et un chariot (21), ledit chariot (21) pouvant recevoir la cassette (40) et pouvant être déplacé relativement au support (35) après avoir reçu la cassette (40), et
il est prévu au moins un élément tendeur (33), en particulier un ressort de traction ou un ressort de pression, qui assure l'accouplement du chariot (21) au support (35) de façon à ce que, lorsque le chariot (21) est déplacé relativement au support (35) dans la direction de déplacement (V), l'élément tendeur (33) soit soumis à une contrainte qui génère des forces de rappel agissant dans la direction opposée à la direction de déplacement (V) et permettant au chariot (21) de se déplacer dans la direction opposée à la direction de déplacement (V), ce qui provoque, respectivement, un déblocage indépendant de la cassette, une fermeture indépendante de la cassette et un verrouillage indépendant de la cassette.

2. Dispositif selon la revendication 1, **caractérisé en ce que** le mouvement de la cassette (40) lors de son introduction dans le dispositif d'insertion (20) est un mouvement effectué par un opérateur, en particulier un mouvement de translation.

3. Dispositif selon la revendication 1 ou 2, **caractérisé en ce que** l'élément mécanique (22 - 28) est présent sous forme d'au moins un levier (22 - 25) ou d'un système de leviers qui, par le biais du mouvement de la cassette (40) étant introduite, peut être mis dans une position dans laquelle le levier (22 - 25) ou le système de leviers bloque la cassette (40) dans une position prédéterminée.

4. Dispositif selon l'une quelconque des revendications précédentes, **caractérisé en ce que** l'élément mécanique (22 - 28) est présent sous forme d'au moins un élément de déverrouillage (26) qui, par le biais du mouvement de la cassette (40) étant introduite, peut être mis dans une position dans laquelle l'élément de déverrouillage (26) peut déverrouiller une fermeture (41) disposée à la cassette (40).

5. Dispositif selon l'une quelconque des revendications précédentes, **caractérisé en ce que** l'élément mécanique (22 - 28) est présent sous forme d'au moins un élément d'ouverture (27, 28) qui, par le biais du mouvement de la cassette (40) étant introduite, peut être mis dans une position dans laquelle l'élément d'ouverture (27, 28) peut ouvrir une fermeture (41) disposée à la cassette (40).

6. Dispositif selon l'une quelconque des revendications précédentes, comprenant un mécanisme de blocage (21, 29 - 39) qui permet de bloquer ledit au moins un élément mécanique (22 - 28) dans la position dans laquelle l'élément mécanique (22 - 28) bloque la cassette (40) dans la position prédéterminée et déverrouille et ouvre la fermeture (41), et de le dégager de ladite position.

7. Dispositif selon l'une quelconque des revendications précédentes, **caractérisé en ce que** le chariot (21) est monté de façon mobile au support (35).

8. Dispositif selon l'une quelconque des revendications précédentes, **caractérisé en ce que** ledit au moins un élément mécanique (22 - 28) est disposé au chariot (21) et peut être déplacé, avec le chariot (21), relativement au support (35).

9. Dispositif selon la revendication 8, **caractérisé en ce que** le support (35) est pourvu d'un ou plusieurs éléments de guidage (38, 39) qui permettent de modifier la position dudit au moins un élément mécanique (22 - 28) lorsque le chariot (21) est déplacé relativement au support (35).

10. Système destiné à la lecture d'informations radiographiques stockées dans une plaque luminescente à mémoire (1), comprenant une cassette (40) destiné à recevoir une plaque luminescente à mémoire (1),
**caractérisé par**
un dispositif selon l'une quelconque des revendications précédentes.

11. Système selon la revendication 10, **caractérisé en ce que** la cassette (40) comprend une ouverture et une fermeture (41), en particulier un rabat pivotant, permettant de fermer l'ouverture.

12. Système selon la revendication 11, **caractérisé en ce que** la cassette (40) comprend un élément de verrouillage permettant de maintenir, en particulier de verrouiller, la fermeture (41) dans une position qui ferme l'ouverture, ledit élément de verrouillage étant actionnable depuis l'extérieur de la cassette (40).

13. méthode pour la lecture d'informations radiographiques stockées dans une plaque luminescente à mémoire (1), comprenant les étapes consistant à :
insérer une cassette (40) contenant une plaque luminescente à mémoire (1) dans un dispositif d'insertion (20) et
irradier la plaque luminescente à mémoire (1) avec de la lumière de stimulation (3, 3') et à capter la lumière d'émission stimulée dans la plaque luminescente à mémoire (1) lors de cette irradiation,
au moins un élément mécanique (22 - 28) étant entraîné mécaniquement par un mouvement de la cassette (40) lorsque celle-ci est introduite dans le dispositif d'insertion (20) et pouvant ainsi bloquer et/ou ouvrir et déverrouiller la cassette (40) dans le dispositif d'insertion (20),
**caractérisé en ce que**
le dispositif d'insertion (20) comprend un support (35) et un chariot (21), ledit chariot (21) recevant la cassette (40) et étant déplacé relativement au support (35) après avoir reçu la cassette (40), et
ledit chariot (21) est accouplé au support (35) à l'aide d'au moins un élément tendeur (33), en particulier un ressort de traction ou un ressort de pression, de façon à ce que, lorsque le chariot (21) est déplacé relativement au support (35) dans la direction de déplacement (V), l'élément tendeur (33) soit soumis à une contrainte qui génère des forces de rappel agissant dans la direction opposée à la direction de déplacement (V) et permettant au chariot (21) de se déplacer dans la direction opposée à la direction de déplacement (V), ce qui provoque, respectivement, un déblocage indépendant de la cassette, une fermeture indépendante de la cassette et un verrouillage indépendant de la cassette.
